# EUROPEAN PATENT APPLICATION

(11) **EP 1 359 128 A2**
(43) Date of publication of application: **05.11.2003**
(21) Application number: 03076246.2
(22) Date of filing: 29.04.2003
(51) Int. Cl.: C03B 37/014, C03B 37/012, C03C 13/04, G02B 6/16

(54) **Method of manufacturing phosphosilicate optical fibre preforms and optical fibers drawn therefrom**

(30) Priority: 30.04.2002 US 136653
(71) Applicant: CORNING INCORPORATED, Corning, N.Y. 14831 (US)
(72) Inventor: Burke, Eugene Gerald, Plaited post, NY 14870 (US); Dawes, Steven Bruce, Corning, NY 14830 (US); Granger, Gary Paul, Lafayette, CO 80026 (US); Murtagh, Michael Thomas, Horseheads, NY 14845 (US); Tandon, Pushkar, Corning, NY 14830 (US); Treusdale, Carlton Maurice, Corning, NY 14830 (US); Wang, Ji, Painted Post, US 14870 (US)
(74) Representative: Poole, Michael John

(57) **Abstract**

A method of manufacturing a cane suitable for forming an optical fiber, and a method of forming an optical fiber from the cane. A core composition having about 20% to 30% by weight of P₂O₅ is formed. An inner cladding composition is formed on an outer surface of the core composition and the core composition and the inner cladding composition are consolidated into a preform having a core and an inner cladding while substantially closing a center line hole of the preform. An outer cladding composition is formed on the preform to define a cane. The cane can then be transformed into an optical fiber.

## Description

### FIELD OF THE INVENTION

The invention relates generally to the production of optical fibers and more specifically to phosphosilicate optical fibers and a method of producing such optical fibers.

### BACKGROUND OF THE INVENTION

Optical fibers are used in a variety of applications, including communications systems, optical computers, laser tuning devices, and the like. Optical fibers, generally have a diameter in cross-section of about 125 µm and are composed of at least two portions, a central core and a cladding layer disposed about the core in a concentric manner. The cladding layer has an index of refraction which is less than that of the core, with a typical index variation from the core to the cladding layer being in the range from about 0.3% to 1% depending on the specific application.

Typically, in the manufacture of optical fibers, a glass object, for example, a glass rod, is formed and molten glass is formed from the rod by suspending the rod in a furnace. The optical fiber is drawn from the molten glass of the rod by a capstan, or other mechanism to form the fiber. Conventionally, the draw temperature is between 2000°C and 2100°C.

The glass rod can be formed by any one of several processes, such as the Outer Vapor Deposition (OVD) process. The OVD process comprises a "laydown" step or steps in which a soot preform is formed from ultra-pure vapors caused to react in a flame to form fine soot particles of silica and germania. (soot is a layer of porous particles made of silica and other dopants.) The soot particles are deposited on the surface of a rotating target bait-rod. The core material is deposited first, followed by the pure silica cladding. As both core and cladding raw materials are vapor-deposited, the entire preform will be totally synthetic and extremely pure.

When deposition is complete, the target bait-rod is removed from the center of the preform to leave a centerline hole in the preform, and the preform is placed into a consolidation furnace. During the consolidation process, the water vapor is removed first from the preform by use of drying agent such as Cl₂. Then, followed by a high-temperature consolidation step that sinters the preform into a solid, dense, and transparent glass. Conventionally, consolidation is terminated with the centerline hole open, which is eventually closed in the following redraw step at a furnace of about 2000°C.

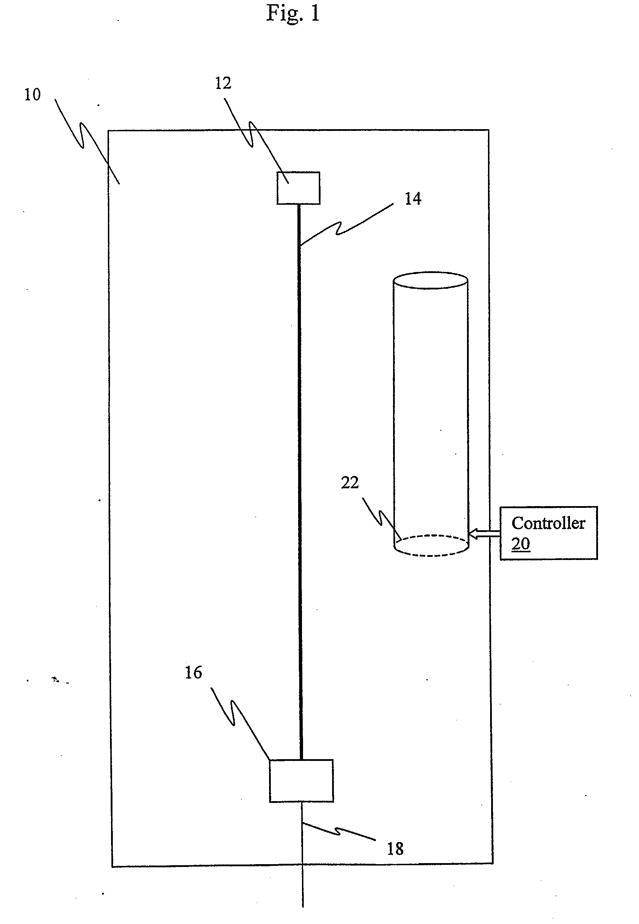

As illustrated in Fig. 1, the finished glass preform 14 is then placed on a draw tower and drawn into one continuous strand of glass fiber in draw furnace 10. A typical draw furnace includes suspension device 12 from which the glass preform can be suspended, and a draw mechanism such as capstan 16. Heating element 22 raises the temperature in draw furnace 10 and controller 20 controls activation of the heating element 22 and thus the temperature in draw furnace 10. Preform 14 is heated in draw furnace 10 until at least a portion thereof proximate the drawing mechanism is molten. The drawing mechanism is then activated to draw the preform at a predetermined temperature and tension to form optical fiber 18.

### SUMMARY OF THE INVENTION

A first aspect of the invention is a method for manufacturing a cane adapted to be formed into an optical fiber comprises the steps of: forming a core having about 20% to 30% by weight of P₂O₅, forming an inner cladding on an outer surface of the core, consolidating the core and the inner cladding into a preform having a core and an inner cladding, and forming an outer cladding on the preform to define a cane.

A second aspect of the invention is an optical fiber comprising: a core having about 20% to 30% by weight of P₂O₅, an inner cladding disposed in a concentric manner on the core and consisting essentially of P₂O₅ - F - SiO₂, and an outer cladding disposed in a concentric manner on the inner cladding.

A third aspect of the invention is a method of manufacturing and optical fiber comprising forming a core having about 20% to 30% by weight of P₂O₅, forming an inner cladding on an outer surface of the core, consolidating the core and the inner cladding into a preform having a core and an inner cladding, forming an outer cladding on the preform to define a cane, and transforming the cane into an optical fiber having a core, and inner cladding, and an outer cladding.

### BRIEF DESCRIPTION OF THE DRAWING

The invention is described through a preferred embodiment and the attached drawing in which:

Fig. 1 is a schematic illustration of an apparatus for drawing a glass rod into an optical fiber;

Fig. 2 is a flowchart of a process for manufacturing a cane in accordance with the preferred embodiment;

Fig. 3 is a flowchart of a process for forming a barrier layer in accordance with the preferred embodiment; and

Fig. 4 is a cross-sectional view of an optical fiber in accordance with the preferred embodiment.

### DETAILED DESCRIPTION

New applications for optical fibers are being developed almost continuously. Recently, it has been discovered that Phosphosilicate fibers can be used as erbium-doped extended L-band fiber amplifiers in the 1570 to 1620 nm range. Phosphosilicate fibers are the only known silica based fibers that provide gain up to 1620 nm or greater because of the favorable Erbium spectroscopy in P-Si. Such fibers have a silica glass core of relatively high concentration of Er₂O₃ (about 1500-3000ppm by weight and preferably, about 2000pmm or 0.3 wt%), about 2 % by weight of Yb₂O₃, and a high phosphorous (about 25-30% by weight). However, such a composition presents difficulties in manufacture.

Conventional manufacturing procedures, and the collapsing step in particular, cause separation between the materials used for the core and cladding due primarily to thermo-mechanical property mismatch between the core and cladding layers. The separation can result in captured air in the cane, known as "seeds," which result in fibers having imperfections and thus exhibiting impaired performance.

In particular, the above-noted core composition is very soft as compared to conventional Ge-Si core and cladding materials. Further, the phosphosilicate material has a higher thermal expansion coefficent, a lower softening temperature, higher volatility of dopants, higher diffusivity, and higher affinity to water than conventional Ge-Sicore and cladding materials. All of which can present unique problems in the manufacturing process.

Applicant has discovered that, by using a consolidation procedure in which the centerline hole of the blank is substantially closed, formation of seeds can be minimized or eliminated. The preferred embodiment includes a consolidation process comprising sintering of the preform, i.e. lower temperature consolidation with a slow down drive step (i.e. 1.5 mm/min or lower, and preferably 1mm/min or less, and most preferably 0.3mm/min to 0.5 mm/min) step in which the centerline hole is closed, after the initial drying process. A down drive is defined as a preform movement from the top of the sintering zone to the bottom of the sintering zone. The sintering process can be accomplished at about 1310 ⁺/- 25°C and for a time period long enough to sinter the cladding layer and close the centerline. Drying can be accomplished at 800-850°C with a drying agent such as Cl₂ or with POCl₃ as disclosed in US patent application entitled "Drying Agent And Improved Process For Drying Soot Preforms" by Gerald E. Burke, Lisa F. Chang, Steven B. Dawes, Gary P. Granger, Michael T. Murtagh, Chukwuemeka B. Onuh, Susan L. Schiefelbein, Jeanne L. Swecker, Ji Wang, Joseph M. Whalen (SP00-273A) and incorporated by reference herein.

Glass layers, in the form of canes, used to form optical fibers of the preferred embodiment can be formed in any manner. However, the preferred embodiment utilizes an OVD process to form a cane as described generally above.

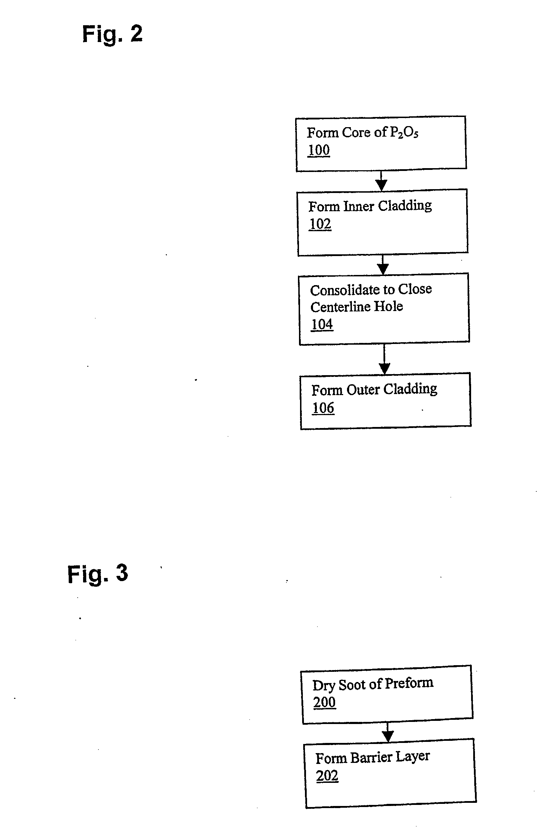

Fig. 2 illustrates a method of manufacturing an optical fiber in accordance with a preferred embodiment of the invention. In step **100,** a core composition having about 20% to 30% by weight of P₂O₅ (in SiO₂) is formed, using an OVD process or other process. For example, one or more laydown steps can be accomplished using ultrapure POCl₃ (and S₁Cl₄) vapors reacting in a (CH₄ + O₂) flame, to form soot particles on a rotating rod while the flame is scanned in the length direction of the rod. However, any process can be used for forming the core composition.

In step **102**, an inner cladding composition is formed on the outer surface of the core composition. The inner cladding composition is different from the core composition and from the composition of the outer cladding. The inner cladding composition may include P₂O₅ - F - SiO₂ and can be formed through any known process, such as an OVD process using one or more laydown steps. The inner cladding serves to minimize thermal and mechanical stresses between the core composition, and the outer cladding formed in the manner set forth below, as further processing is accomplished. Preferably the inner cladding substantially matches the index of refraction of the outer cladding (i.e. less than 0.2% delta).

In step **104**, the core composition and the inner cladding composition are consolidated by heating after removal of the rod. Significantly, the centerline hole of the cane, left after removal of the rod, is closed along substantially the entire length of the preform as a result of the consolidation step. The preferred embodiment includes a consolidation process comprising a drying step and a sintering, i.e. low temperature consolidation, step in which the centerline hole is closed. The sintering process can be accomplished at about 1310 ± 25°C and for a time period long enough to sinter the cladding layer and close the centerline.
Drying can be accomplished at 800-850°C.

In step **106**, an outer cladding composition is formed on the preform to define a cane which is suitable for further processing in a known manner to manufacture an optical fiber. The outer cladding can be formed with a silica overclad process. Alternatively, the outer cladding can be formed by inserting the preform into a silica sleeve. The cane can then be used to form an optical fiber through any known process, such as the drawing process described above with respect to Fig. 1.

Step **102** can include a doping process in which the inner cladding is doped with boron, fluorine, or another desirable material depending on the ultimate application of the optical fiber. For example, in erbium-doped L-band amplifiers, Raman amplifiers, and fiber lasers, it is known to dope the cladding with a lower melting point material, such as boron or fluorine, to decrease the thermal mismatch between the core and the cladding. The fluorine doping may be done in either a laydown or a consolidation step.

Significant migration of the doping composition into the core has been observed during consolidation causing interactions between the core composition and the doping composition. Interaction of phosphorous and fluorine cause the formation of highly volatile complexes which lead to the escape of much of the phosphorous and fluorine from the preform. Similarly, migration of boron into the core composition is undesirable because it can cause quenching of the erbium lifetime in Erbium doped amplifiers. Thus it is important to prevent or minimize migration of the dopant into the core composition. Applicant has found that formation of a glassy barrier layer, preferably a layer that is highly dense and has a low water content, provides an effective barrier to prevent migration of the dopant.

The glassy barrier layer can be formed between the core composition and the inner cladding in any manner, such as with a vapor deposition process. Applicant has developed a process for forming such a layer that is very thin and highly effective as a barrier. Fig. 3 illustrates a process for forming the barrier layer of the preferred embodiment. The process of Fig. 3 can be accomplished after step **100** and prior to step **102** of Fig. 2 discussed above.

As illustrated in Fig. 3, after forming of the core composition but prior to forming of the inner cladding composition, the soot is dried in step **200**. The drying step can be accomplished by application of a chlorine rich flame or other dry or non-OH flame sources. For example, carbon monoxide or deuterium can be used as flame sources. In step **202**, a thin outer portion of the core composition is selectively consolidated to form a glassy barrier layer. Step **202** can be accomplished by applying heat with any dry combustion flame, laser or plasma source. For example, a microwave coupled plasma torch operating at about 3kW can be used. It is preferable that the radiation is absorbed primarily in the first several tens of microns of the core composition to provide good thickness control of the barrier layer. Preferably, the barrier layer is from 20 to 100 mm and preferably 30 to 50µm thick. Also, it has been found that use of a CO₂ laser for forming the barrier layer is desirable. Such a laser does not introduce water into the core composition and provides highly localized heating for accurate thickness control. Finally, a CO/D₂/O₂ flame can be used to form a barrier layer substantially free of OH.

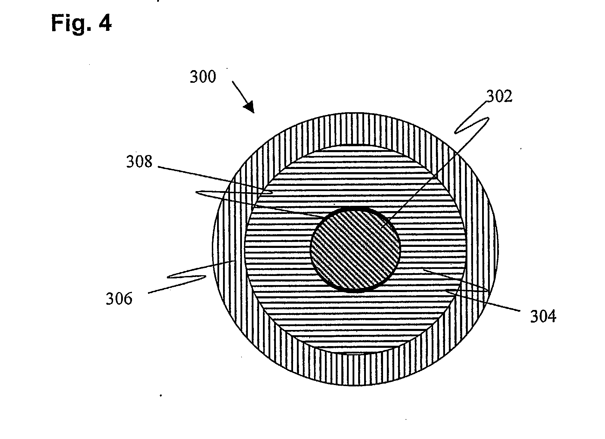

Fig. 4 illustrates an optical fiber manufactured from the cane described above including the barrier layer. Optical fiber **300** includes core **302**, inner cladding **304**, barrier layer **308**, and outer cladding **306**. Each layer composition can be manufactured in the manner described above and from the materials described above.

Various materials and processes can be used in connection with the invention. The preforms, canes and fibers can be used in various applications. The energy sources, temperatures, and timing of the manufacturing process can be varied as necessary. The invention can include additional layers formed prior to or after transformation of the cane into a fiber. Optical fibers in accordance with the invention can have various configurations and can be used for various applications. Additional steps can be performed to add various layers or to change the properties of the layers.

The invention has been described through a preferred embodiment. However, various modifications can be made without departing from the scope of the invention as defined by the appended claims and legal equivalents.

### PARTS LIST

- 10: Furnace
- 12: Suspension Device
- 14: Preform
- 16: Capstan
- 18: Optical Fiber
- 20: Controller
- 22: Heating Element
- 302: Core
- 304: Inner Cladding
- 306: Outer Cladding
- 308: Barrier Layer

## Claims

1. A method of manufacturing a cane suitable for forming an optical fiber, said method comprising:
(a) forming a core having about 20% to 30% by weight of P₂O₅;
(b) forming an inner cladding on an outer surface of the core ;
(c) consolidating the core and the inner cladding into a preform having a core and an inner cladding; and
(d) forming an outer cladding on the preform to define a cane.

2. The method as recited in claim 1, wherein said inner cladding consists essentially of P₂O₅ - F - SiO₂.

3. The method as recited in claim 1, 2, or 19 wherein said steps (a) and (b) each comprise a vapor deposition process.

4. The method as recited in claim 3 or 19 wherein said vapor deposition processes are accomplished at a bait surface temperature of less than 800°C.

5. The method as recited in claim 1, 2, 3, 4, or 19, wherein said step of forming an outer cladding comprises depositing silica on said inner cladding.

6. The method as recited in claim 1, 2, 3, 4, or 19, wherein said step of forming an outer cladding comprises inserting the preform into a silica sleeve.

7. The method as recited in claim 1, 2, 3, 4, 5, 6, or 19, wherein said step (b) further comprises doping the inner cladding.

8. The method as recited in claim 1, 2, 3, 4, 5, 6, 7, or 19, wherein said step (a) further comprises forming a glassy barrier layer between said core and said inner cladding.

9. The method as recited in claim 1, 2, 3, 4, 5, 6, 7, or 19, wherein, during said step (c), a centerline hole of the core is closed along substantially the entire length of the preform.

10. The method as recited in claim 8, wherein said step of forming a glassy barrier layer comprises a surface consolidation process using a deuterium-based flame.

11. The method as recited in claim 8, wherein said step of forming a glassy barrier layer comprises a surface consolidation process using a CO₂ laser.

12. The method as recited in claim 8, wherein said glassy barrier layer is 20µm to 100µm thick.

13. An optical fiber comprising:
a core having about 20% to 30% by weight of P₂O₅ ;
an inner cladding disposed in a concentric manner on the core and consisting essentially of P₂O₅ - F - SiO₂;
an outer cladding disposed in a concentric manner on the inner cladding.

14. The optical fiber as recited in claim 13, wherein said outer cladding comprises silica.

15. The optical fiber as recited in claim 13 or 14, wherein said inner cladding is doped with fluorine.

16. The optical fiber as recited in claim 13, 14, or 15, wherein an index of refraction of the said inner cladding matches and index of refraction of said outer cladding.

17. The optical fiber as recited in claim 13, 14, 15, or 16, further comprising a glassy barrier layer disposed between the core and the inner cladding.

18. The optical fiber as recited in claim 17, wherein said glassy barrier layer is 20µm to 100µm thick.

19. A method of manufacturing an optical fiber, using the method of claim 1 and further including the step of transforming the cane into an optical fiber having a core, and inner cladding, and an outer cladding.

20. The method as recited in claim 19, wherein said step of transforming the cane into an optical fiber comprises suspending the cane in a draw furnace, heating the cane to a molten state, and drawing the cane into a fiber.

21. The method as recited in claim 8, wherein said step of forming a glassy barrier layer utilizes a carbon-monoxide flame.
